# EUROPÄISCHE PATENTANMELDUNG

(11) **EP 0 948 180 A2**
(43) Veröffentlichungstag der Anmeldung: **06.10.1999**
(21) Anmeldenummer: 99105401.6
(22) Anmeldetag: 16.03.1999
(51) Int. Cl.: H04M 3/42, H04Q 1/02

(54) **Kommunikationssystem mit Baugruppenträgereinheit**

(30) Priorität: 31.03.1998 DE 19814435
(71) Anmelder: SIEMENS AKTIENGESELLSCHAFT, 80333 München (DE)
(72) Erfinder: Brune, Georg, Dr., 58675 Hemer (DE)

(57) **Zusammenfassung**

In einem kleinen System einer, außerdem ein mittleres und gegebenenfalls ein großes System umfassenden Systemreihe, werden systemuntypische Steckplätze zur Verfügung gestellt. Diese sind in anderer Weise als die systemspezifischen Steckplätze mit Signalen versorgt. Diese Signale und ihre Behandlung durch die Systemsteuerung sind in dem betreffenden System für sich verfügbar, werden jedoch anderweitig genutzt. Der zusätzliche Steckplatz SP wird also in der Weise ausgestaltet, daß Steckbaugruppen aus den mittleren und großen Systemen als Peripheriebaugruppen einsetzbar sind. Dabei können ohne aufwendige Zusatzentwicklung selten angewendete Lösungen wirtschaftlich vertretbar realisiert werden. So können unmittelbar Leistungsmerkmale, wie z. B. die Cordless Integration aus einem großen System in einem kleinen System verfügbar gemacht werden.

## Beschreibung

Es ist üblich Kommunikationssysteme, insbesondere Nebenstellenkommunikationssysteme auf der Grundlage einer im wesentlichen übereinstimmenden Systemsoftware für verschiedene Ausbauvarianten Zu entwickeln, die dann als sogenannte kleinere, mittlere und große Kommunikationssysteme einer Systemreihe verfügbar sind. Jedes System innerhalb der bei angenähert gleichem Systemkonzept in einer aufsteigenden Reihenfolge gegliederten Systemreihe ist seinerseits hinsichtlich der Anschlußmöglichkeiten für Teilnehmeranschlußleitungen und der Anschlußmöglichkeiten für besondere Systeme, -insbesondere öffentliche Systeme-, variabel zu gestalten. Die Hardwareplattformen dieser Systeme unterscheiden sich im wesentlichen durch ihren konstruktiven Aufbau durch die Art der Rückwandverdrahtung und durch das Format, d. h. die Abmessungen, der Peripheriebaugruppen. Das führt dazu, daß durch diese Unterschiede eine für bestimmte Funktionen entwickelte Baugruppe, z. B. eines mittleren bzw. großen Systems dieser Reihe, nicht in einem sogenannten kleineren System einsetzbar sind. Sie müssen wegen der Unterschiede in der Abmessung, in den Schnittstellen und in den mechanischen Steckverbindern plattformbezogen neu entwickelt werden. Das betrifft beispielsweise spezielle Leistungsmerkmale und spezielle Amts- bzw. Datennetzzugänge, die z. B. grundsätzlich nur für die in der Systemreihe höher eingeordneten Systeme vorhanden sind. Das führt dann dazu, daß solche spezielle Lösungen, die nur für eine beschränkte Anzahl derartiger kleiner Systeme vorgesehen sind, nur mit einem hohen Aufwand realisiert werden können.

Es ist die Aufgabe der Erfindung, diese Situation zu verbessern. Diese Aufgabe wird ausgehend vom Kommunikationssystem nach den Merkmalen des Oberbegriffes des Patentanspruches 1 durch dessen kennzeichnende Merkmale gelöst.

Das wesentliche der Erfindung besteht darin, daß ein kleines System hinsichtlich seiner Hardwareplattform derart ausgestaltet ist, daß es flexibel systemuntypische periphere Baugruppen aus einem anderen System der Systemreihe aufnehmen kann. Für eine solche Aufnahme einer Baugruppe ist durch eine entsprechende mechanische Vorleistung nur noch eine geringfügige Adaptionsmaßnahme erforderlich. Die Ressourcen für die z. B. PCM-orientierten bzw. HDLC-orientierten Steckstellen der im Bedarfsfall aufzunehmenden Baugruppe aus einem anderen System sind grundsätzlich bereits vorhanden. Durch diese Vorleistung, z. B. innerhalb von Koppelwegzugängen liegt also bereits eine gewisse Kompatibilität vor.

Der Adaptionsaufwand innerhalb einer vorhandenen Zentralbaugruppe des Grundsystems, das einen Steckplatz für eine systemuntypische Baugruppe aufweist, ist gering, da eine solche Baugruppe aus einem "höheren" System neben entsprechenden Hardwareanteilen auch noch in der Regel eine eigene Steuerung aufweist, durch die ihre Softwaremodule entsprechend zur Ausführung gelangen.

Erfindungsgemäß werden als zusätzliche Steckplätze für periphere Steckbaugruppen entweder Steckplätze verwendet, die durch eine Systemvariation in Form des Einsatzes von höher integrierten Baueinheiten einer zentralen Baugruppe freigeworden sind oder solche, die von vornherein optional vorgesehen sind. Derartige Steckbaugruppen eines höheren Systems dienen dann zur Realisierung eines besonderen für das Grundsystem ursprünglich nicht verfügbaren besonderen Dienstemerkmals. Damit erspart man sich die sonst notwendige plattformspezifische Entwicklung für ein solches Dienstemerkmal, da eine entsprechende Baugruppe für mehreren Plattformen Verwendung finden kann.

Erfindungsgemäß sind die zusätzlichen Steckplätze hinsichtlich der Signalisierungsversorgung derart ausgestaltet, daß aus dem Repertoire von Steckbaugruppen, die in einer innerhalb der Systemreihe höher eingestuften System vorhanden sind, einige beliebige davon im Sinne der Erweiterung der Funktionalität des Systems zusätzlich nutzbar sind.

Die erfindungsgemäße Lösung wird anhand einer Figur, die ein Schema einer Anlagenstruktur eines Grundsystems zeigt, erläutert.

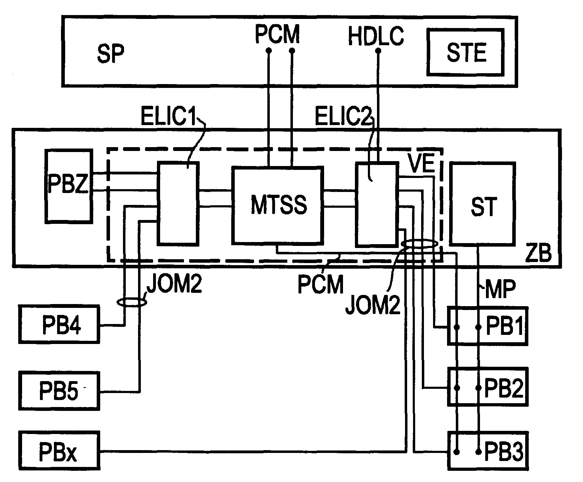

Dieses Kommunikationssystem zur Vermittlung angeschlossener Kommunikationsendgeräte untereinander und zur Verbindung solcher Endgeräte mit Kommunikationsnetzen, z. B. öffentlichen Netzen über entsprechende Amtszugänge enthält eine Zentralbaugruppe ZB. Eine solche Zentralbaugruppe weist u. a. eine aus einem Mikroprozessor, einen Speicher und aus einer Taktversorgung bestehende Steuerung ST und eine Vermittlungseinheit VE auf. Letztere besteht beispielsweise aus zwei peripherieorientierten Telekommunikationsbausteinen ELIC 1 und ELIC 2, sowie einen Kopplungsbaustein MTSS (Memory Time Switch). Der Koppelbaustein MTSS kommuniziert jeweils mit dem peripherieorientierten Baustein ELIC über PCM-orientierte Schnittstellen, während die Kommunikation dieser Bausteine ELIC mit den peripheren Steckbaugruppen PB1 bis PBx über ISDN-orientierte interne Schnittstellen IOM 2 erfolgt. Ein solcher peripherieorientierter Baustein ELIC ist systemunabhängig ausgestattet, so daß er auch grundsätzlich die Möglichkeit einer HDLC (High Data Link Control)-Signalisierung zur Kommunikation mit anderen Bausteinen bietet. Durch die Figur ist die Anlagenstruktur eines Kommunikationssystems angedeutet, das z. B. als sogenanntes kleines System, das Grundsystem einer Systemfamilie bildet. Diese Systemfamilie weist dann noch innerhalb einer vorgegebenen Reihe "höher" angesiedelte Systeme, wie z. B. mittlere und große Systeme auf. Für ein solches kleines Kommunikationssystem kann vorgesehen sein, daß z. B. bezüglich eines Minimalausbaus auch auf der zentralen Baugruppe ZB peripherieorientierte Baugruppen PBZ vorgesehen sind. Für einen Maximalausbau sind dann noch weitere Steckplätze PB1 bis PBx für periphere Steckbaugruppen vorhanden. Diese Steckplätze bzw. die Steckbaugruppen sind systemspezifisch ausgebildet. Sie unterscheiden sich von peripheren Steckbaugruppen bzw. Steckplätzen eines mittleren und großen Systems bezüglich der Abmessungen, der Schnittstellen und der mechanischen Steckverbinder. Will man z. B. im Rahmen eines Einprozessorsystemes systemtypisch ausgebildete Steckbaugruppen für spezielle in den mittleren und größeren Systemen bereits mögliche Funktionen einsetzen, dann erfordert dies einen großen Aufwand. In einem solchen Fall müßte zur vollständigen Integration die gesamte hierzu notwendige Software in die Software der zentralen Baugruppe ZB eingebracht werden.

Beispiel für eine solche erwünschte Erweiterung in der Funktionalität ist beispielsweise die Möglichkeit unter Einbeziehung eines solchen kleinen Kommunikationssystems über ein Mobilteil telefonieren zu können. Es müßte also für dieses kleine System die für mittlere und große Systeme vorhandene Baugruppe für CMI (Cordless Maticell Integration) systemspezifisch, d. h. mit dem notwendigen Leiterplattenformat und damit spezifischen Layout und der erforderlichen Software entwickelt werden. Andere Beispiele sind spezielle Lösungen für Amtszugänge, wie sie für bestimmte Länder erforderlich sind und eine Steckkarte, die die Einbindung in eine Local Area Network-Umgebung ermöglicht. Die Erweiterung der Funktionalität für ein kleines Kommunikationssystem könnte auch darin bestehen, daß Teilnehmerbaugruppen mit einer erhöhten Anzahl von Teilnehmeranschlüssen pro Haugruppe erforderlich wären.

Um bezüglich solcher Erweiterungen eine eigene Entwicklung dieser Haugruppen zu vermeiden, ist nun vorgesehen im kleinen Kommunikationssystem einen Steckplatz SP für systemuntypische Steckbaugruppen auszubilden, die bereits in mittleren und großen Systemen eingesetzt werden. Die hierzu notwendigen Möglichkeiten einer Informationsübermittlung zu dieser systemuntypischen Baugruppe sind bereits in diesem kleinen System vorgeleistet. Wie in der Figur angedeutet, sind zumindest einige der systemtypischen Steckbaugruppen je nach ihrer Komplexität mit einer PCM-Signalisierung versehen. Um die Anzahl der zu übertragenden Kanäle zu erhöhen, benötigen einzelne dieser systemtypischen Baugruppen neben dem IOM 2 Zugang auch noch den PCM-Anschluß. Weiterhin sind einige dieser Baugruppen über den Microprozessor-Bus MP mit der Steuerung verbunden. Darüber werden beispielsweise Baugruppenkennungen und Informationen die Verbindungsdaten aus einer ISDN-Verbindung betreffen, übermittelt. Der Steckplatz SP für eine Steckbaugruppe aus einem anderen System der Systemreihe weist als systemuntypischer Steckplatz für Peripheriesteckbaugruppen gegenüber den systemtypischen Steckplätzen PB1 bis PBx auch eine höhere Anzahl von Peripherieports auf. Solche im Bedarfsfall spezielle Funktionen abdeckende Steckbaugruppen weisen wegen ihrer zugrundeliegenden Komplexität eine eigene Steuerung STE auf, da sie originär einem Mehrprozessor Kommunikationssystem zugehören. Das bietet bei ihrer erfindungsgemäßen Übernahme in ein Grundsystem, d. h. in ein kleines Kommunikationssystem den Vorteil, daß sie nicht komplett integriert werden müssen, da sie einen Großteil der Funktionen bereits mitbringen. Es muß lediglich nur noch eine geringfügige Adaption vorgenommen werden. Der wesentliche Softwareanteil für eine solche Baugruppe läuft grundsätzlich auf dieser Baugruppe selbst. Der Zugang zur Vermittlungseinheit VE erfolgt über eine bereits vorgeleistete PCM-Verbindung, über die die Vermittlung der B-Kanäle vorgenommen wird. Die Kommunikation der systemuntypischen Peripheriebaugruppe mit der vorhandenen zentralen Baugruppe ZB des kleinen Systems erfolgt mittels einer HDLC-Strecke über den ELIC. Dieser Baustein besitzt eine entsprechende, das HDLC-Protokoll unterstützenden Anschluß. Durch diese Möglichkeit der Übernahme einer peripheren Steckbaugruppe aus einem anderen System können auch Lösungen realisiert werden, die nur in einer geringen Stückzahl angeboten werden sollen. Dies ist insbesondere interessant für "exotische Amtstechniken", die damit in mehreren Systemen benutzt werden könnten, ohne daß für ein kleines System hierzu eine eigene systemkonforme Steckbaugruppe entwickelt werden muß. Um die Verbindung zu der jeweiligen von einem anderen System übernommenen Steckbaugruppe zu bewirken, müssen lediglich durch die Systemsoftware die entsprechenden Koppelpunkte für die Kommunikation angesprochen werden. Hierzu ist kein zusätzlicher Aufwand erforderlich, da sowohl PCM-Anschlüsse als auch ein HDLC-Anschluß bereits auf der zentralen Haugruppe des kleinen Systems vorhanden sind.

## Patentansprüche

1. Kommunikationssystem, insbesondere ein prozessorgesteuertes Nebenstellen-Kommunikationssystem, das als konstruktive Teileinheit mindestens eine Baugruppenträgereinheit mit Steckplätzen für Steckbaugruppen aufweist und das zu einer hinsichtlich der Systemgröße bzw. des Systemkonzeptes in einer aufsteigenden Reihenfolge gegliederten Systemreihe gehört, wobei es ein in dieser Reihe nieder-eingeordnetes (kleines) System darstellt,
**dadurch gekennzeichnet,**
daß zusätzlich zu den Steckplätzen für systemspezifische Steckbaugruppen mindestens ein weiterer Steckplatz für eine periphere systemuntypische, bereits für ein in der Systemreihenfolge höher eingeordnetes System (mittleres bzw. großes System) verfügbare Steckbaugruppe vorgesehen ist, daß dieser weitere Steckplatz in anderer Weise als bei den Steckplätzen für systemspezifische Steckbaugruppen aus den bereits insgesamt vorhandenen und durch die Systemsteuerung verarbeitbaren Steuerquellen mit vorbestimmten und für die Funktion notwendigen unterschiedlichen Steuersignalinformationen (PCM, HDLC) versorgt ist.

2. Kommunikationssystem nach Anspruch 1,
**dadurch gekennzeichnet,**
daß als zusätzliche Steckplätze für periphere Steckbaugruppen entweder steckplätze, die durch eine Systemvariation in Form des Einsatzes von höher integrierten Baueinheiten einer zentralen Steckbaugruppe freigeworden sind oder solche, die von vornherein optional vorgesehen sind, verwendet werden.

3. Kommunikationssystem nach Anspruch 1 oder 2,
**dadurch gekennzeichnet,**
daß der mindestens eine zusätzliche Steckplatz für eine periphere systemuntypische Steckbaugruppe zur Realisierung eines besonderen Dienstemerkmals, das in einem in der Systemreihe höher eingestuften System zur Verfügung steht, verwendet wird.

4. Kommunikationssystem nach einem der Ansprüche 1 bis 3,
**dadurch gekennzeichnet,**
daß die zusätzlichen Steckplätze hinsichtlich der Signalisierungsversorgung derart ausgestaltet sind, daß aus dem Repertoire von Steckbaugruppen, die in einem innerhalb der Systemreihe höher eingestuften System (mittleres oder großes System) vorhanden sind, einige Beliebige davon im Sinne der Erweiterung der Funktionalität des Systems zusätzlich nutzbar sind.

5. Kommunikationssystem nach Anspruch 4,
**dadurch gekennzeichnet,**
daß die periphere Steckbaugruppe für den zusätzlichen Steckplatz eine Steuerungseinheit (STE) aufweist, durch die baugruppenspezifische Steuerfunktionen ausgeführt werden.
